# EUROPÄISCHE PATENTSCHRIFT

(11) **EP 2 754 830 B1**
(45) Veröffentlichungstag und Bekanntmachung des Hinweises auf die Patenterteilung: **26.12.2018**
(21) Anmeldenummer: 14151143.6
(22) Anmeldetag: 14.01.2014
(51) Int. Cl.: E06B 5/16, E06B 3/02, B32B 17/10, C03C 27/12, E06B 3/663

(54) **Profillose Brandschutzverglasung**
Fire resistant glazing with no profile
Vitrage coupe-feu sans profilé

(30) Priorität: 14.01.2013 DE 202013100185 U
(43) Veröffentlichungstag der Anmeldung: 16.07.2014
(73) Patentinhaber: Holzbau Schmid GmbH & Co. KG, 73099 Adelberg (DE)
(72) Erfinder: Schmid, Claus, 73099 Adelberg (DE)
(74) Vertreter: Ring & Weisbrodt

(56) Entgegenhaltungen:
- EP-A2- 1 020 605
- EP-A2- 2 378 044
- EP-A2- 2 733 294
- WO-A1-2010/091525
- CH-A1- 703 342

## Beschreibung

Die Erfindung betrifft eine Brandschutzverglasung zur Vermeidung des Durchtritts von Feuer und Rauch im Brandfall von einem Raum in einen anderen, mit zumindest zwei aus Brandschutzscheiben bestehenden Glasflächen, wobei die Brandschutzscheiben mittels eines Randverbunds parallel voneinander beabstandete Glasscheiben aufweisen und der vom Randverbund eingeschlossene Raum zwischen den Glasscheiben mit einem Brandschutzgel gefüllt ist, wobei unmittelbar auf einer Außenseite der Brandschutzscheibe zwei Glasscheiben übereinander in Form einer Doppellaminierung, die Brandschutzscheibe abdeckend, angeordnet sind.

Aus dem Stand der Technik sind verschiedenartige raumtrennende Brandschutzverglasungen bekannt. Dabei wird vollkommen auf in der Glasfläche befindliche Profile oder Zargen aus Holz oder Metall verzichtet. Benachbart angeordnete Elemente der Brandschutzverglasung, beispielsweise ein seitliches Festelement und eine Glastür, sind unmittelbar profilfrei nebeneinander angeordnet.

Die bekannten Verglasungen zeichnen sich durch einen besonders hohen Lichtdurchtritt aus. Weiterhin wirken diese Verglasungen aufgrund der Ganzglasbauweise optisch leicht und ansprechend, da man ihnen die Brandschutzeigenschaften wenig ansieht. Um diese Brandschutzeigenschaften gewährleisten zu können, bestehen die einzelnen Elemente der Brandschutzverglasung jeweils aus mittels eines Randverbunds parallel voneinander beabstandeten Glasscheiben, wobei der vom Randverbund eingeschlossene Raum zwischen den Glasscheiben mit einem Brandschutzgel gefüllt ist.

Die zur Halterung der Glasflächen der Brandschutzverglasung benötigten Beschlagelemente bestehen in der Regel aus Metall. Nachteiligerweise stehen diese Elemente aus der Ebene der Verglasung hervor und unterbrechen die klare optische Linie der Brandschutzverglasung.

Die EP 2 378 044 A2 offenbart eine Tür- oder Fensteranordnung mit rahmenloser Tür- oder Fensterflügelanordnung mit Isolierverglasung. In einer solchen Anordnung kann zwischen den Glasscheiben eine Isolierverglasung dadurch eingebracht werden, dass nach Herstellen der Isolierverglasung mit Hilfe einer Metallform Kunststoffmasse eingespritzt wird, wobei nach Durchreagieren beziehungsweise Aushärten der Kunststoffmasse diese Anordnung deren entsprechende Formgebung die Aufnahme von Beschlägen beziehungsweise Beschlagelementen erlaubt.

Die EP 1 020 605 A2 offenbart eine Befestigungsvorrichtung für Beschlagteile eines rahmenlosen Glasflügels, der als drehbarer oder ortsfester Flügel einer Tür, eines Fensters oder einer ortsfesten Fassade ausgebildet ist. Dabei weist der Glasflügel zwei parallele, zueinander beabstandete Scheiben und einen am Außenbereich der Scheiben umlaufenden Abstandhalter auf, welcher den Innenraum der Scheiben dicht umschließt und im Außenbereich der Scheiben Freiräume zur Aufnahme eines Trage- und Randabschlusselements bildet. Zur Erzielung einer hohen wärmeisolierenden Wirkung sind die beiden Scheiben voneinander thermisch getrennt, indem das Trage- und/oder Randabschlusselement sowie der Abstandhalter aus einem wärmeisolierenden Material ausgebildet sind.

Die Aufgabe der vorliegenden Erfindung besteht darin, bei derartigen Verglasungen die Ästhetik zu verbessern, indem eine Flächenbündigkeit zwischen den Brandschutzscheiben der Brandschutzverglasung und an der Brandschutzverglasung angeordneten Elementen, beispielsweise Halterungselementen, Beschlagelementen, Schlosskasten, Stoßkasten und dergleichen, angestrebt wird. Ferner soll die Verglasung gute Brandschutzeigenschaften, eine gute Rauchdichtigkeit sowie ein hohes Maß an Stabilität aufweisen.

Die erfindungsgemäße Aufgabe wird gelöst durch eine Brandschutzverglasung der eingangs genannten Art, die dadurch gekennzeichnet ist, dass eine der Glasscheiben der Doppellaminierung gegenüber der anderen Glasscheibe der Doppellaminierung unter Ausbildung eines Stufenfalzes zurückspringt.

Der Erfindung liegt die Erkenntnis zugrunde, dass durch das Anordnen einer weiteren Glasscheibe eine Flächenbündigkeit der Brandschutzverglasung und der daran angeordneten Elemente erreicht werden kann. An der Brandschutzverglasung angeordnete Elemente, wie beispielsweise Halterungselemente und/oder Beschlagelemente, weisen nahezu die gleiche Dicke auf, wie die weitere Glasscheibe. Damit entsteht eine optisch ungebrochene ebene Oberfläche der Brandschutzverglasung. Die Brandschutzverglasung wirkt in der Folge besonders leicht, ansprechend und ästhetisch.

Für die Brandschutzscheiben der Brandschutzverglasung kommen sämtliche Arten von Glasscheiben in Frage. Vorzugsweise besteht jedoch zumindest eine der Glasscheiben aus Sicherheitsglas, insbesondere aus Einscheibensicherheitsglas oder Verbundsicherheitsglas. Dies ist besonders vorteilhaft, da dieses bei extrem hohen Temperaturen im Brandfall in sehr viele kleine Bruchstücke zerspringt, von denen zum einen nur eine geringe Verletzungsgefahr ausgeht und die zum anderen auch im zerborstenem Zustand gut am Brandschutzgel haften und damit weiterhin das Brandschutzgel für eine gewisse Zeit vor dem direkten Flammenkontakt schützen. Erfindungsgemäß lassen sich jedoch ebenso andere Glasscheiben, wie Floatglas verwenden.

Die Glasscheiben können unabhängig voneinander eine Scheibendicke von 3 mm bis 20 mm, bevorzugt 5 mm bis 10 mm aufweisen. Der Abstand der Glasscheiben kann vorzugsweise im Bereich von 5 mm bis 50 mm liegen. Besonders bevorzugt beträgt der Abstand der Glasscheiben voneinander etwa 8 mm bis 30 mm, da sich auf diese Weise insbesondere bei mit Brandschutzgel gefüllten Brandschutzverglasungen gute Brandresistenzen bei gleichzeitig moderatem Gewicht der Verglasung erzielen lassen.

Der Raum zwischen den Glasscheiben ist mit einem besonderen Brandschutzgel gefüllt. Diese derart aufgebauten Brandschutzscheiben haben gegenüber den ansonsten vielfach eingesetzten Brandschutzscheiben mit festen silikathaltigen intumeszierenden Zwischenschichten, beispielsweise auf Wasserglasbasis, den Vorteil, dass sie ein geringes Flächengewicht bei vergleichbarer Feuerwiderstandsklasse erreichen können. Das bedeutet nicht nur einen einfacheren Transport der Scheiben, sondern auch, dass die Halterung und Rahmenkonstruktion wegen der geringeren Last leichter ausgelegt werden können.

Ferner sind die mit Brandschutzgel gefüllten Brandschutzscheiben gegenüber den Scheiben mit festen silikathaltigen Intumeszenz-Zwischenschichten weitaus weniger anfällig gegen eindringende Feuchtigkeit, welche bei den letztgenannten zur Trübung der Zwischenschicht führt, was den Austausch der Scheibe erfordert.

Mit einem Brandschutzgel gefüllte Brandschutzscheiben bestehenden bevorzugt aus zwei parallel voneinander beabstandeten Glasflächen aus Einscheibensicherheitsglas, die über ein in ihren Randbereichen zwischen den Glasscheiben liegendes umlaufendes Abstandshalteprofil und zum Beispiel einen Polyurethan-Randverbund fixiert und miteinander verbunden sind. Durch eine Öffnung in diesem nach innen versetzten Abstandshalteprofil werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt. Die im Rahmen der Erfindung eingesetzten Brandschutzgele können auch Additive beinhalten, wie Silikate, UV-Schutzmittel oder auch Farbstoffe.

Im Rahmen der Erfindung kann zwischen einer Außenseite einer Brandschutzscheibe und der darauf unmittelbar, die Brandschutzscheibe abdeckend, angeordneten Glasscheibe eine Klebeschicht angeordnet sein, um einen ausreichenden Halt der weiteren Glasscheibe zu gewährleisten. Die Klebeschicht ist transparent und sehr dünn, so dass weiterhin im Sinne der Erfindung von einer unmittelbar auf einer Außenseite einer Brandschutzscheibe angeordneten weiteren Glasscheibe gesprochen wird.

Die bevorzugte Ausgestaltung der Erfindung ist dadurch gekennzeichnet, dass die die Brandschutzscheibe abdeckende Glasscheibe mit einer Außenseite einer Brandschutzscheibe in Form einer Laminierung verklebt ist, insbesondere mittels eines Polyvinylbutyral (PVB)-Klebstoffs. Der PVB-Klebstoff kann als Schmelzklebstoff in Form von Zwischenfolien verwendet werden. Ein Nebeneffekt hiervon ist, dass der PVB-Kunststoff eine splitterbindende Wirkung erzielt und zerborstenes Glas, wie es beispielsweise im Brandfall auftreten kann, an dem PVB-Kunststoff haften bleibt.

Die Erfindung sieht vor, dass unmittelbar auf einer Außenseite einer Brandschutzscheibe zwei Glasscheiben in Form einer Doppellaminierung, die Brandschutzscheibe abdeckend, angeordnet sind. Durch die Verwendung der Doppellaminierung ist es möglich, eine Flächenbündigkeit der Brandschutzverglasung auch bei weiter vorragenden Beschlagelementen zu erzielen. Die Ästhetik der Brandschutzverglasung wird damit erhöht, da ein optisch eleganterer Gesamteindruck entsteht. Die an der Brandschutzverglasung angeordneten Beschlagelemente und/oder Halteelemente sowie Schlosskasten, Stoßkasten oder dergleichen, weisen eine quasi identische Dicke wie die Doppellaminierung auf.

Um die Doppellaminierung befestigen zu können, sind die Glasscheiben der Doppellaminierung miteinander verklebt, insbesondere mittels eines Polyvinylbutyral (PVB)-Klebstoffs.

Die Erfindung ist dadurch gekennzeichnet, dass eine der Glasscheiben der Doppellaminierung gegenüber der anderen Glasscheibe der Doppellaminierung unter Ausbildung eines Stufenfalzes zurückspringt. Durch die Verwendung einer Doppellaminierung kann ein Stufenfalz einfach gebildet werden.

Der Stufenfalz erzeugt beim Schließen einer Tür der Brandschutzverglasung eine Überlappung mit einem nebengeordneten Festelement der Brandschutzverglasung, um durchgehende Zugluft umzulenken und eine Dichtwirkung zwischen der Tür und dem Festelement zu erreichen. Der Stufenfalz kann mit weiteren Merkmalen ausgestattet werden, wie beispielsweise mit einer Dichtung. Ferner kann ein intumeszierendes Material für eine zuverlässige Brandschutzabdichtung im Stufenfalz angeordnet werden. Im Brandfall schäumt das intumeszierende Material auf und dichtet die Glastür gegen die angrenzenden Festelemente der Brandschutzverglasung ab. Der Durchtritt von Feuer und Rauch kann wirksam unterbunden werden.

Eine Ausgestaltung der Erfindung sieht vor, dass die andere Glasscheibe der Doppellaminierung über die vertikal verlaufende Stoßkante der Brandschutzscheibe hinaus hervorspringt. Dies ermöglicht eine Überlappung der Glasscheibe der Doppellaminierung mit einem nebengeordneten Element der Brandschutzverglasung. Insbesondere kann die Glasscheibe der Doppellaminierung über die vertikal verlaufende Stoßkante einer Glastür unter Ausbildung eines Stufenfalzes hervorspringen und die Überlappung beim Schließen der Glastür mit einem nebengeordneten Festelement der Brandschutzverglasung erzeugen. In dem Stufenfalz kann eine Dichtung, insbesondere eine Lippendichtung, angeordnet werden, wobei die Dichtung von außen betrachtet nicht sichtbar ist. Der ästhetische Gesamteindruck der Brandschutzverglasung wird folglich nicht durch die Dichtung unterbrochen. Die Dichtung kann beispielsweise aus Gummi oder Silikon bestehen und über Federhaken verfügen, mit denen diese in dafür vorgesehenen Dichtungsnuten des Stufenfalzes gehalten wird. Ein weiteres Merkmal der Dichtung ist, dass diese einen Schließvorgang der Glastür dämpfen kann.

Weiterhin können die Glasscheiben der Doppellaminierung gegenüber der vertikal verlaufenden Stoßkante der Brandschutzscheibe unter Ausbildung eines Rückversatzes zurückspringen. Beispielsweise kann durch den Rückversatz der Doppellaminierung an einem Festelement der Brandschutzverglasung ein Überlappungsbereich für die hervorspringende Glasscheibe einer Doppellaminierung einer Glastür geschaffen werden. So wird beim Schließen der Glastür und dem damit verbundenen Eingreifen der Doppellaminierung der Glastür in den Rückversatz des nebengeordneten Festelements eine Flächenbündigkeit der Brandschutzverglasung erzielt. Des Weiteren kann ein Rückversatz der Doppellaminierung erforderlich sein, wenn beispielsweise ein Beschlagelement an einem Element der Brandschutzverglasung angeordnet wird. Durch den Rückversatz fügt sich das Beschlagelement in die durch den Rückversatz entstandene Aussparung ein, so dass im gesamten die Flächenbündigkeit der Brandschutzverglasung erzielt werden kann.

Erfindungsgemäß weist die Laminierung bzw. die Doppellaminierung eine Dicke von etwa 3 mm bis etwa 12 mm, vorzugsweise von etwa 5 mm bis etwa 10 mm, besonders bevorzugt von etwa 8 mm auf. Dies entspricht zweckmäßigerweise in etwa der Dicke von an der Brandschutzverglasung angeordneten Elementen, wie beispielsweise Halte- und/oder Beschlagelementen. Weiterhin kann damit das Gewicht der Brandschutzverglasung moderat ausfallen, was die profillose Bauweise der Brandschutzverglasung begünstigt. Ferner sind an der Brandschutzverglasung angeordnete Halte- und/oder Beschlagelemente geringeren Belastungen ausgesetzt. Dies begünstigt ebenfalls eine elegantere Optik der Brandschutzverglasung.

Die Erfindung wird im Folgenden anhand der Fig. 1 bis Fig. 4 näher beschrieben. Dabei zeigen:
- Fig. 1: eine erfindungsgemäße Brandschutzverglasung in der Draufsicht;
- Fig. 2: eine ausschnittsweise Vergrößerung eines Bereichs entlang der horizontalen Schnittlinie H1 gemäß Fig. 1;
- Fig. 3: eine ausschnittsweise Vergrößerung eines Bereichs entlang der horizontalen Schnittlinie H2 gemäß Fig. 1; sowie
- Fig. 4: eine weitere Ausgestaltung in einer ausschnittsweisen Vergrößerung entlang der horizontalen Schnittlinie H3 gemäß Fig. 1.

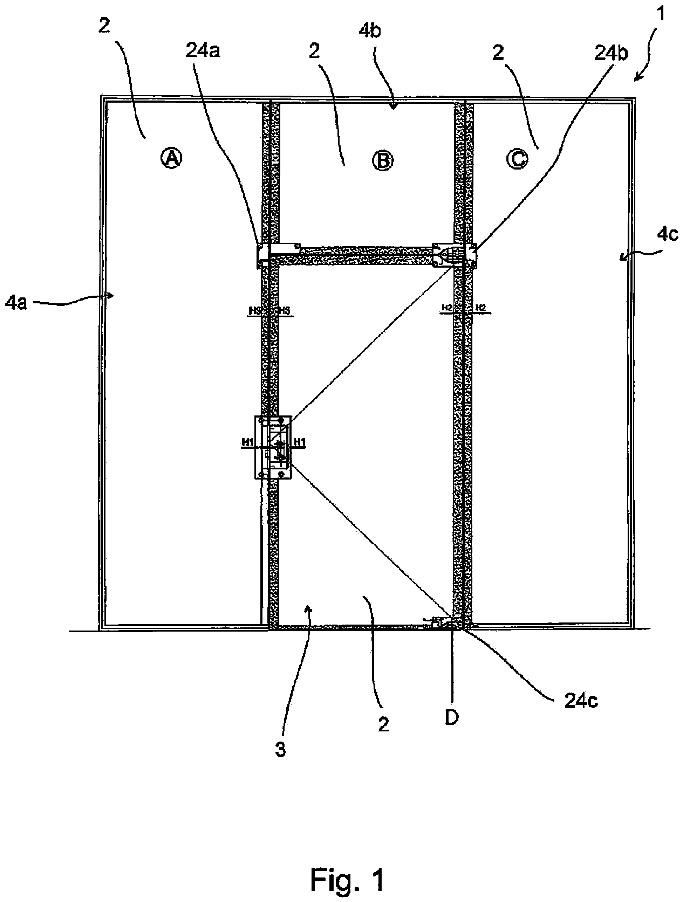

In Fig. 1 ist eine erfindungsgemäße Brandschutzverglasung 1 zur Vermeidung des Durchtritts von Feuer und Rauch im Brandfall von einem Raum in einen anderen in der Draufsicht dargestellt. Die Brandschutzverglasung 1 weist drei aus Brandschutzscheiben 2 bestehende und nebeneinander angeordnete Glasflächen A bis C auf, wobei in der inneren Glasfläche B eine Glastür 3 angeordnet ist und über der ein Festelement 4b vorgesehen ist. Auf der rechten Seite der Glastür 3 ist ein seitliches Festelement 4c und auf der linken Seite ein weiteres Festelement 4a vorgesehen.

Die Glastür 3 ist als Pendeltür ausgebildet und mittels eines oberen Eckhalters 24b an dem oberen Festelement 4b und der Brandschutzscheibe 2 des seitlichen Festelements 4c unmittelbar und verschwenkbar gehalten. Auf diese Weise fixiert der obere Eckhalter 24b auch das obere Festelement 4b und das seitliche Festelement 4c zusätzlich aneinander. Die Drehachse D der Glastür 3 verläuft durch das Türblatt, ist also vom Rand gesehen leicht nach innen versetzt.

Die Glastür ist mittels eines als Bodentürschließer ausgebildeten unteren Ecklagers 24c verschwenkbar gehalten. Die Brandschutzverglasung 1 weist also weder ein in den Glasflächen A bis C angeordnetes Profil, noch eine Zarge für die Glastür 3 auf. Ein weiterer Eckhalter 24a fixiert die Glasfläche A und B, sowie die Glastür 3 aneinander.

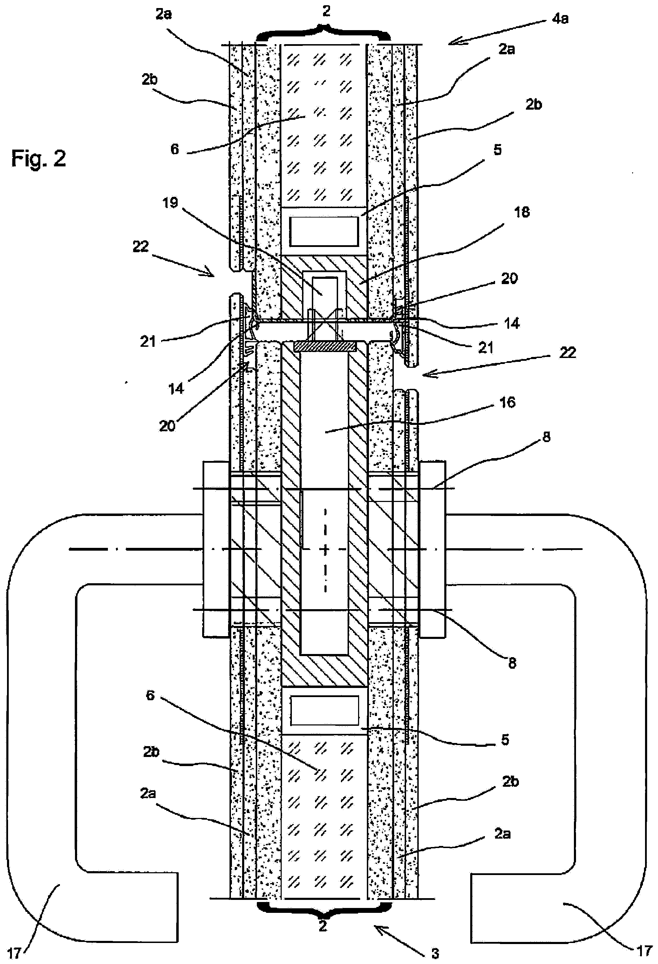

Fig. 2 stellt einen Horizontalschnitt H1 durch die Brandschutzverglasung gemäß Fig. 1 an entsprechend gekennzeichneter Stelle dar. Es ist zu erkennen, dass die Brandschutzscheibe 2 - sowie alle Brandschutzscheiben der dargestellten Brandschutzverglasung - aus zwei parallel zueinander mittels eines Randverbunds 5 aus Polyurethan beabstandeten Glasscheiben aus Einscheibensicherheitsglas besteht. Der von den Glasscheiben der Brandschutzscheibe 2 und dem Randverbund 5 eingeschlossene Raum ist mit einem Brandschutzgel 6 gefüllt. Die Glasscheiben der Brandschutzscheiben 2 sind jeweils 8 mm stark, wobei der Abstand der Innenflächen voneinander 28 mm beträgt. Die Dicke der Brandschutzscheibe 2 beträgt 44 mm von Außenfläche zu Außenfläche gemessen.

Das Brandschutzgel 6 wird beispielsweise als Hydrogel aus einer NaCl/MgCl₂ Salzlösung unter Zugabe polymerisierbarer Verbindungen wie einer Mischung aus Acrylamid, N-Methylolacrylamid, Methylenbisacrylamid und einem Polymerisationsbeschleuniger in Wasser entweder vor dem Einfüllen zwischen die Glasscheiben der Brandschutzscheibe 2 hergestellt oder in situ zwischen den Glasscheiben der Brandschutzscheibe 2 erzeugt, indem die oben genannten Komponenten miteinander vermischt und direkt in den Hohlraum zwischen die Glasscheiben der Brandschutzscheibe 2 eingefüllt werden. Die Polymerisation zum Hydrogel erfolgt dann im nun mit der Mischung ausgefüllten Hohlraum.

Die Glastür 3 und das Festelement 4a weisen jeweils Brandschutzscheiben 2 auf, wobei auf deren Außenseiten jeweils zwei weitere Glasscheiben 2a, b, eine Doppellaminierung bildend, angeordnet sind. An der Glastür 3 sind zwei Türgriffe 17 angeordnet, welche über Verbindungselemente 8, die durch die Brandschutzscheibe 2 sowie die zwei äußeren Glasscheiben 2a, b durchgreifen, miteinander verbunden sind. An der Glastür 3 ist ein Schloss 16 angeordnet. Das Festelement 4a weist ein korrespondierendes Schließblech 18 auf, welches unter Ausbildung einer Nut, in welche die Schlossfalle 19 eingreifen kann, die Arretierung der Glastür 3 im geschlossenen Zustand an dem Festelement 4a gewährleistet.

Die Glasscheibe 2a springt gegenüber der Glasscheibe 2b an der Glastür 3 unter Ausbildung eines Stufenfalzes 20 zurück. Ein weiterer, analog ausgebildeter Stufenfalz ist an dem Festelement 4a angeordnet. Korrespondierend zu den Stufenfälzen 20 weisen die Glasscheiben 2a, b an dem nebengeordneten Festelement 4a bzw. der nebengeordneten Glastür 3 jeweils einen Rückversatz 22 der Glasscheiben 2a, b auf. Beim Schließen der Glastür 3 entsteht eine Überlappung der Glasscheiben 2b mit den Brandschutzscheiben 2 des Festelements 4a bzw. der Glastür 3 jeweils bedingt durch den Rückversatz 22. Es sind Lippendichtungen 21 in den Stufenfälzen 20 angebracht, so dass eine Dichtwirkung, insbesondere gegenüber Rauch, an dem Übergang zwischen der Glastür 3 und dem Festelement 4a entsteht. Die Dichtwirkung wird durch die Verwendung zweier Lippendichtungen 21 verstärkt. Ferner wird der Schließvorgang der Glastür 3 durch die Verwendung der Lippendichtungen 21 gedämmt.

An dem Festelement 4a sind im Bereich des Schließbleches 18, den Rückversätzen 22 und den Stufenfälzen 20 intumeszierende Materialien 14 angeordnet, welche im Brandfall aufschäumen und eine Dichtwirkung des Festelements 4a gegenüber der Glastür 3 bewirken. Der Übergangsbereich wird damit gegenüber dem Brandfall gesichert.

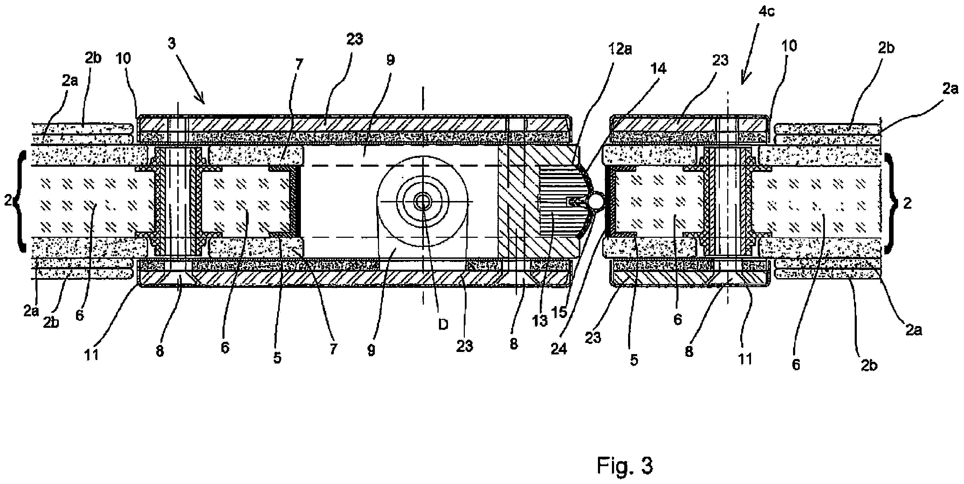

Fig. 3 zeigt eine ausschnittsweise Vergrößerung entlang der horizontalen Schnittlinie H2 im hinteren Vebindungsbereich der Brandschutzverglasung 1, umfassend die Glastür 3 und das Festelement 4c. Die Glastür 3 und das Festelement 4c umfassen jeweils eine Brandschutzscheibe 2, welche mit einem Brandschutzgel 6 gefüllt ist. An den Außenseiten der Brandschutzscheiben 2 sind jeweils zwei weitere Glasscheiben 2a, b in Form einer Doppellaminierung angeordnet. Die Glastür 3 ist in einem Drehpunkt D drehbar gelagert. Um eine Dichtwirkung der Glastür 3 gegenüber dem Festelement 4c zu gewährleisten verfügt die Glastür 3 über eine Silikonschlauchdichtung 15, welche bei einer Verschwenkung der Glastür 3 eine Dichtwirkung gegenüber dem Festelement 4c sicherstellt. Die Befestigungselemente 23 sind Bestandteile des Eckhalters 24b gemäß Fig. 1 und werden dazu verwendet, den Halt der Glastür 3 an dem Festelement 4c zu realisieren.

Die Befestigungselemente 23 bestehen aus Stahlplatten, die aus optischen Gründen mit polierten Edelstahlabdeckungen 10, 11 versehen sind. Die Befestigungselemente 23 sind beidseitig jeweils auf den Brandschutzscheiben 2 aufgesetzt und mittels durch die Brandschutzscheiben 2 geführten Verbindungselementen 8 aneinander befestigt. Zwischen den Befestigungselementen 23 ist im Bereich des Glasausschnitts 7 ein Material 9 vorgesehen, dass den Bereich des Glasausschnitts 7 weitestgehend vollständig ausfüllt.

Durch die Anordnung der Glasscheiben 2a, b auf den Außenseiten der Brandschutzscheiben 2 wird eine Flächenbündigkeit zu den Edelstahlabdeckungen 10, 11 der Befestigungselemente 23 hergestellt. In der Gesamtbetrachtung steht damit der Eckhalter 24b nicht mehr von der Brandschutzverglasung 1 hervor. In der Folge entsteht ein optisch harmonischer Gesamteindruck.

Die Silikonschlauchdichtung 15 besitzt vorliegend einen Durchmesser von 8 mm und liegt im geschlossenen Zustand der Glastür 3 an der Oberfläche des an dem Festelement 4c angeordneten intumeszierenden Materials 14 an und dichtet gegenüber dieser Oberfläche rauchdicht ab. In die sich zwischen den Glasscheiben der Brandschutzscheibe 2 und dem Festelement 4c ausbildenden Nuten 12a sind Streifen eines silikatischen Materials 13 eingesetzt, wobei diese an ihren Außenseite einen abgerundeten Querschnitt aufweisen. Ferner ist zusätzlich die Außenseite mit einer Schicht eines intumeszierenden Materials 14 versehen.

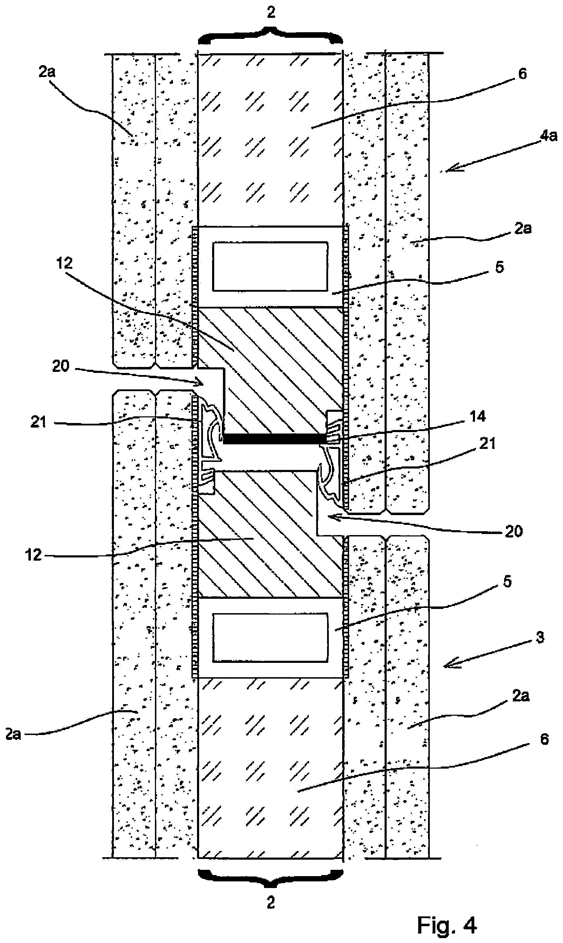

In Fig. 4 ist eine nicht anspruchsgemäße Ausgestaltung einer Brandschutzverglasung zu sehen. Die alternative Ausgestaltung ist in einem vergrößerten Bereich entlang der horizontalen Schnittlinie H3 gemäß Fig. 1 dargestellt. Bei dieser ist eine Glastür 3 und ein Festelement 4a zu sehen, wobei die Drehtür 3 drehbar gelagert ist und im geschlossenen Zustand einen Brandschutz gesicherten Übergang zu dem Festelement 4a der Brandschutzverglasung 1 darstellt.

Im Gegensatz zu den Ausgestaltungen gemäß den Fig. 2 und 3 weisen Brandschutzscheiben 2 an ihren Außenseiten nur eine weitere Glasscheibe 2a in Form einer einfachen Laminierung auf. Die Dicke der Glasscheibe 2a beträgt 8 mm, so dass die Gesamtdicke 60 mm beträgt. Diese unterscheidet sich damit nicht gemäß der Ausgestaltung, welche in den Fig. 2 und 3 dargestellt ist. Damit wird auch bei dieser Brandschutzverglasung eine Flächenbündigkeit mit an der Brandschutzverglasung angeordneten Elemente erzielt.

Entlang den vertikal verlaufenden Stoßkanten ist zusätzlich zum Randverbund 5 jeweils ein Nutelement 12 angeordnet. Dieses ist derart geformt, dass das Nutelement 12 mit den Glasscheiben der Brandschutzscheibe 2 und den Glasscheiben 2a der Laminierung jeweils einen Stufenfalz bildet. In den Stufenfälzen 20 sind zwei Lippendichtungen 21 angeordnet. Diese dichten gegenüber den an der Glastür 3 bzw. an dem Festelement 4a angeordneten Nutelementen 12 ab, so dass einerseits eine Dichtwirkung, andererseits eine Dämmwirkung beim Schließen der Glastür 3 entsteht. Ferner ist an dem Nutelement 12 des Festelements 4a ein intumeszierendes Material 14 angebracht. Dieses kann im Brandfall aufschäumen und somit eine Abdichtung des Festelements 4a gegenüber der Glastür 3 gewährleisten. Der Übergangsbereich wird damit gegenüber dem Brandfall gesichert und sämtliche Komponenten der Brandschutzverglasung sind rauchdicht.

### Bezugszeichenliste:

- 1: Brandschutzverglasung
- 2: Brandschutzscheibe
- 2a, b: Glasscheibe
- 3: Glastür
- 4a, b, c: Festelement
- 5: Randverbund
- 6: Brandschutzgel
- 7: Glasausschnitt
- 8: Verbindungselement
- 9: Material
- 10: Edelstahlabdeckung
- 11: Edelstahlabdeckung
- 12: Nutelement
- 12a: Nut
- 13: Streifen aus silikatischem Material
- 14: intumeszierendes Material
- 15: Silikonschlauchdichtung
- 16: Schloss
- 17: Türgriff
- 18: Schließbelch
- 19: Schlossfalle
- 20: Stufenfalz
- 21: Lippendichtung
- 22: Rückversatz
- 23: Befestigungselement
- 24a, b, c: Eckhalter
- A, B, C: Glasflächen
- D: Drehpunkt der Glastür

## Patentansprüche

1. Brandschutzverglasung zur Vermeidung des Durchtritts von Feuer und Rauch im Brandfall von einem Raum in einen anderen, mit zumindest zwei aus Brandschutzscheiben (2) bestehenden Glasflächen,
wobei die Brandschutzscheiben (2) zwei mittels eines Randverbunds (5) parallel voneinander beabstandete Glasscheiben aufweisen und der vom Randverbund (5) eingeschlossene Raum zwischen den Glasscheiben mit einem Brandschutzgel (6) gefüllt ist,
wobei unmittelbar auf einer Außenseite der Brandschutzscheibe (2) zwei Glasscheiben (2a,b) übereinander in Form einer Doppellaminierung, die Brandschutzscheibe (2) abdeckend, angeordnet sind,
**dadurch gekennzeichnet, dass**
eine der Glasscheiben (2a) der Doppellaminierung gegenüber der anderen Glasscheibe (2b) der Doppellaminierung unter Ausbildung eines Stufenfalzes (20) zurückspringt.

2. Brandschutzverglasung nach Anspruch 1, **dadurch gekennzeichnet, dass** die die Brandschutzscheibe (2) abdeckende Glasscheibe (2a) mit der Außenseite der Brandschutzscheibe (2) in Form einer Laminierung verklebt ist, insbesondere mittels eines Polyvinylbutyral (PVB)-Klebstoffs.

3. Brandschutzverglasung nach Anspruch 1 oder 2, **dadurch gekennzeichnet, dass** die Glasscheiben (2a,b) der Doppellaminierung miteinander verklebt sind, insbesondere mittels eines Polyvinylbutyral (PVB)-Klebstoffs.

4. Brandschutzverglasung nach einem der Ansprüche 1 bis 3, **dadurch gekennzeichnet, dass** die andere Glasscheibe (2b) der Doppellaminierung über die vertikal verlaufende Stoßkante der Brandschutzscheibe (2) hinaus hervorspringt.

5. Brandschutzverglasung nach einem der Ansprüche 1 bis 4, **dadurch gekennzeichnet, dass** die Glasscheiben (2a,b) der Doppellaminierung gegenüber der vertikal verlaufenden Stoßkante der Brandschutzscheibe (2) unter Ausbildung eines Rückversatzes (22) zurückspringen.

## Claims

1. A fire resistant glazing for preventing fire and smoke from penetrating from one room into another in case of fire, comprising at least two glass surfaces composed of fire protection panes (2),
wherein the fire protection panes (2) comprise two glass panes which are spaced in parallel from each other by means of an edging compound (5) and the space enclosed by the edging compound (5) between the glass panes is filled with a fire protection gel (6),
wherein two glass panes (2a,b) are placed on top of each other in form of a double lamination directly on an outside of the fire protection pane (2) such that they cover the fire protection pane (2),
**characterized in that**
one of the glass panes (2a) of the double lamination stands back with respect to the other glass pane (2b) of the double lamination while forming a rebated step (20).

2. A fire resistant glazing according to claim 1, **characterized in that** the glass pane (2a) covering the fire protection pane (2) is glued with the outside of the fire protection pane (2) in form of a lamination, in particular by means of a polyvinyl butyral (PVB) adhesive.

3. A fire resistant glazing according to claim 1 or 2, **characterized in that** the glass panes (2a,b) of the double lamination are glued to each other, in particular by means of a polyvinyl butyral (PVB) adhesive.

4. A fire resistant glazing according to one of the claims 1 to 3, **characterized in that** the other glass pane (2b) of the double lamination projects beyond the vertically extending abutting edge of the fire protection pane (2).

5. A fire resistant glazing according to one of the claims 1 to 4, **characterized in that** the glass panes (2a,b) of the double lamination stand back with respect to the vertically extending abutting edge of the fire protection pane (2) while forming a backwards offset (22).

## Revendications

1. Vitrage pare-feu pour empêcher le feu et la fumée de passer d'une pièce à une autre en cas d'incendie, comprenant au moins deux surfaces en verre composées de vitres pare-feu (2),
dans lequel les vitres pare-feu (2) comprennent deux plaques de verre espacées parallèlement l'une de l'autre par moyen d'un joint périphérique (5) et l'espace enfermé par le joint périphérique (5) entre les plaques de verre est rempli d'un gel coupe-feu (6),
dans lequel deux plaques de verre (2a,b) sont disposées l'une au-dessus de l'autre en forme d'un laminage double directement sur une face extérieure de la vitre pare-feu (2), de sorte que les plaques de verre (2a,b) couvrent la vitre pare-feu (2),
**caractérisé en ce que**
l'une des plaques de verre (2a) du laminage double recule vers l'arrière par rapport à l'autre plaque de verre (2b) du laminage double en formant une feuillure étagée (20).

2. Vitrage pare-feu selon la revendication 1, **caractérisé en ce que** la plaque de verre (2a), qui couvre la vitre pare-feu (2), est collée avec la face extérieure de la vitre pare-feu (2) en forme d'un laminage, notamment par moyen d'un adhésif de butyral de polyvinyle (BPV).

3. Vitrage pare-feu selon la revendication 1 ou la revendication 2, **caractérisé en ce que** les plaques de verre (2a,b) du laminage double sont collées l'une à l'autre, notamment par moyen d'un adhésif de butyral de polyvinyle (BPV).

4. Vitrage pare-feu selon l'une des revendications 1 à 3, **caractérisé en ce que** l'autre plaque de verre (2b) du laminage double fait saillie au-delà du bord de butée s'étendant verticalement de la vitre pare-feu (2).

5. Vitrage pare-feu selon l'une des revendications 1 à 4, **caractérisé en ce que** les plaques de verre (2a,b) du laminage double reculent vers l'arrière par rapport au bord de butée s'étendant verticalement de la vitre pare-feu (2) en formant un décalage vers l'arrière (22).
